# EUROPEAN PATENT SPECIFICATION

(11) **EP 0 338 568 B1**
(45) Date of publication and mention of the grant of the patent: **18.08.1993**
(21) Application number: 89107160.7
(22) Date of filing: 20.04.1989
(51) Int. Cl.: G07G 1/14

(54) **Card transaction processing apparatus**
Kartentransaktion-Verarbeitungsvorrichtung
Dispositif de traitement de transactions par carte

(30) Priority: 21.04.1988 JP 98918/88
(43) Date of publication of application: 25.10.1989
(73) Proprietor: OMRON TATEISI ELECTRONICS CO., Kyoto 616 (JP)
(72) Inventor: Tanaka, Toshifumi c/o Omron Tateisi Electronics Co, Nagaokakyo-shi Kyoto 617 (JP)
(74) Representative: WILHELMS, KILIAN & PARTNER Patentanwälte

(56) References cited:
- EP-A- 0 232 057
- US-A- 3 749 887
- US-A- 4 138 733
- US-A- 4 408 292

## Description

### Field of the Invention:

This invention relates to a card transaction processing apparatus and, more particularly, to a card transaction processing apparatus connected to a registration processing unit, which performs sales data registration processing, for executing transaction processing utilizing a card.

### Description of the Prior Application

The inventor of the present application has already proposed (Japanese Patent Application Nos. 62-200606, 62-200609) a card authorization terminal (hereinafter referred to as a "CAT") connected to an electronic cash register (hereinafter referred to as an "ECR") for performing a card transaction service as an auxiliary device of the ECR. In the former of these disclosures relating to CAT's, sales data is received from the ECR, and card data and secret number data lacking the sales data is entered in the CAT itself. The CAT transmits a card transaction request message, which includes the sales data, card data and secret number data, to a host computer. A message indicating the results of processing performed by the host computer is received by the CAT, which returns the message to the ECR as a response.

However, the destinations (namely which of a plurality of output units) to which print data contained in the response message returned to the ECR is to be outputted are fixed, and destinations cannot be designated by the CAT in dependence upon the results of processing from the host computer. Accordingly, if all of the data, which is necessary as far as the store is concerned, is displayed on the customer display unit, even data which does not need to be shown to the customer, such as data indicating the reason why a card transaction has failed, becomes known to the customer. The existence of this problem has become apparent.

In the CAT disclosed in the latter application, it is possible to use not only credit cards but also store cards issued by the store itself. Data read from such a store card is transmitted via the ECR to a store controller which carries out store sales processing. Transaction processing based on the store card is executed by the store controller. However, it is necessary for the ECR operator to observe the card presented by the customer and operate keys conforming to the type of card. Operating the keys is a troublesome task.

Further US-A- 4 408 292 discloses an electronic cash register including a printer system for printing out a transaction data on a receipt bill or a journal paper and a print preset system for causing the printer system to selectively print out the transaction data. The print preset system is provided with a print inhibition preset key. When a print inhibition signal is introduced through the preset key, the transaction data is never printed out. However, the above electronic cash register is neither accompanied with a CAT for performing a card transaction service, nor able to selectively designate destinations for output of the processed results concerning card transaction service.

### SUMMARY OF THE INVENTION

Accordingly, an object of the present invention is to provide a card transaction processing apparatus in which it is possible to designate any destination for output of processed results from a host computer.

Another object of the present invention is to provide a card transaction processing apparatus in which it is possible to automatically change over a destination for data transmission in dependence upon the type of card.

A card transaction processing apparatus according to the present invention comprises input means capable of inputting data necessary for a card transaction when sales data is transmitted from a registration processing unit, card transaction processing means for executing card transaction processing based on the sales data transmitted by the registration processing unit and the data necessary for the card transaction inputted from the input means, and selecting means for selecting a destination (namely which of a plurality of output units) for output of processing results in dependence upon the contents of processing results from the card transaction processing means.

It is permissible to connect the registration processing unit to a sales processing unit which executes store sales processing, in which case the card transaction processing apparatus of the invention further comprises decision means for deciding, based on the data necessary for the card transaction inputted from the input means, whether a store card issued by the shop itself is being used, and control means for transmitting the sales data transmitted by the registration processing unit and the data necessary for the card transaction inputted from the input means to the sales processing unit, rather than performing card transaction processing based on the aforementioned card transaction processing means, in response to a decision by the decision means that the store card is being used.

When sales data is transmitted from the registration processing unit in the card transaction apparatus of the present invention, the data necessary for the card transaction is inputted by the input means, card transaction processing is executed based on the sales data transmitted from the registration processing unit and the data necessary for the card transaction inputted by the input means, and a destination for output of the processed results is selected in dependence upon the contents of the results of card transaction processing. Further, the card transaction processing apparatus of the invention is such that it is determined whether the store card is being used based on the inputted data necessary for the card transaction. If the store card is being used, the above-described card transaction processing is not executed. Rather, the sales data and the data necessary for the card transaction is transmitted to the sales processing unit.

In accordance with the present invention, as set forth above, when sales data is transmitted from the registration processing unit, the data necessary for the card transaction is inputted by the input means, card transaction processing is executed based on the sales data transmitted from the registration processing unit and the data necessary for the card transaction inputted by the input means, and a destination for output of the processed results is selected in dependence upon the contents of the results of card transaction processing. This makes it possible to output data solely to the necessary output destination. Further, in the card transaction processing apparatus of the invention, it is determined whether the store card is being used based on the inputted data necessary for the card transaction. If the store card is being used, the data is transmitted to the sale processing unit capable of processing the store card. This makes it possible to perform card authorization processing automatically without requiring that the operator press keys.

### BRIEF DESCRIPTION OF THE DRAWINGS

Fig. 1 is a view showing the construction of a card transaction processing system to which an embodiment of the invention is applied;
Fig. 2 is a view showing the arrangement of keys on a CAT keyboard depicted in Fig. 1;
Fig. 3 is a block diagram of the electrical arrangement of the CAT shown in Fig. 1;
Figs. 4a and 4b are views for describing messages exchanged by an ECR and the CAT of Fig. 1;
Fig. 5 is a view for describing the data format of output data shown in Fig. 4b;
Fig. 6 is a view for describing data outputted from each output unit of the ECR;
Figs. 7a through 7d are flowcharts for describing the operation of an embodiment of the present invention;
Fig. 8 is a view showing the construction of a card transaction processing system in a second embodiment of the invention;
Fig. 9 is a view for describing a company code table stored in a RAM of the CAT in the second embodiment; and
Fig. 10 is a flowchart for describing operation in a case where a card transaction designating message is received in the second embodiment.

### DETAILED DESCRIPTION OF THE PREFERRED EMBODIMENTS

### First Embodiment

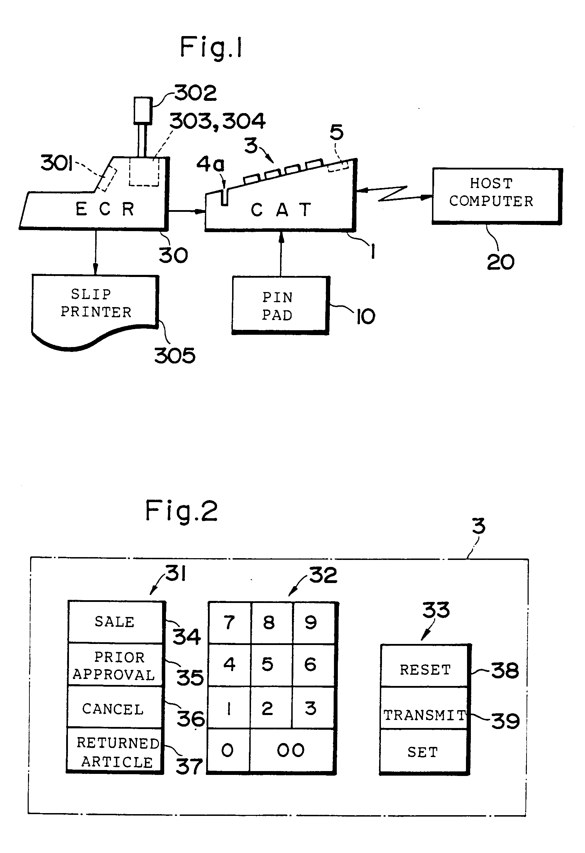

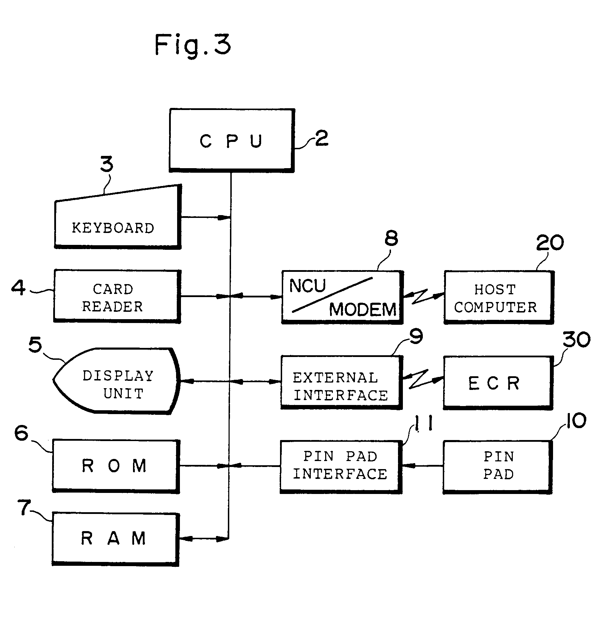

Fig. 1 is a view showing the construction of a card transaction processing system to which an embodiment of the invention is applied, Fig. 2 is a view showing the arrangement of keys on a CAT keyboard depicted in Fig. 1, and Fig. 3 is a block diagram of the electrical arrangement of the CAT shown in Fig. 1. The construction of this embodiment of the invention will now be described with reference to Figs. 1 through 3. The CAT 1 is connected to a host computer 20 and an ECR 30 and executes card transaction processing utilizing a card. On the basis of data transmitted by the CAT 1, the host computer 20 determines whether a card can be utilized and sends the result of the determination to the CAT 1. The ECR 30 executes sales data registration processing. In the present embodiment, the ECR 30 transmits the sales data to the CAT 1. Data necessary for a card transaction not contained in the sales data, such as card data and secret number data, is entered at the CAT 1. These items of data are transmitted from the CAT 1 to the host computer 20. When data indicative of the results of processing from the host computer 20 is received, the CAT 1 designates the destinations (display units and printers, described below, of the ECR 30) for output of this data based on the results of processing and delivers the destinations as well as data indicative of the results of processing to the ECR 30.

The ECR 30 has an operator display unit 301, a customer display unit 302, a journal printer 303, a receipt printer 304 and a slip printer 305 as output units. The data delivered by the CAT 1 is outputted to any designated output unit (display unit, printer). The journal printer 303 prints out the contents of a transaction on a journal serving as a copy for store use. The receipt printer 304 prints out the contents of the transaction on a receipt handed over to the customer. The slip printer 305 prints out the contents of the transaction on a slip.

As shown in Fig. 1, the CAT 1 is provided with a keyboard 3, a card reader 4 (a card reader scanning slot 4a of which is illustrated), and a display unit 5. A PIN pad 10 is connected to the keyboard 3. As shown in Fig. 2, the keyboard 3 includes service keys 31, numeric keys 32, and function keys 33. The service keys 31, which are keys for selecting types of services, include a sale key 34, a prior approval key 35, a cancel key 36 and a returned article key 37. The numeric keys 32 are for entering data relating to article value data, article codes and the like. The function keys 33 are for designating various operations and include a reset key 38, a transmit key 39 and a set key. The card reader 4 is for reading card number data, the code of a credit company, etc. from a card, such as a credit card, possessed by a customer. The display unit 5 displays characters instructing operation, data entered from the keybord 3, the results of processing, etc. The PIN pad 10 allows the customer to input a secret number.

The CAT 1 is provided with a CPU 2, as depicted in Fig. 3. Besides being connected to the keyboard 3, card reader 4 and display unit 5, the CPU 2 is also connected to a ROM 6, a RAM 7, an NCU/MODEM 8, an external interface 9 and a PIN pad interface 11. The ROM 6 stores a program which the CPU 2 needs to execute authorization processing. The RAM 7 includes an area for storing input data and the like. The NCU/MODEM 8, which is for an exchange of data between the CPU 2 and the host computer 20, effects a connection to a telephone line and performs modulation and demodulation of data signals. The ECR 30 is connected to the external interface 9, and the PIN pad 10 is connected to the PIN pad interface 11.

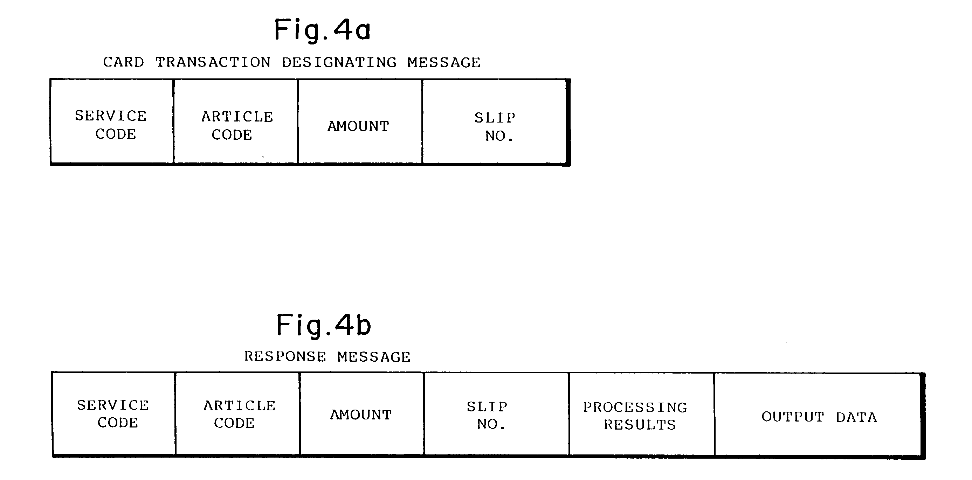

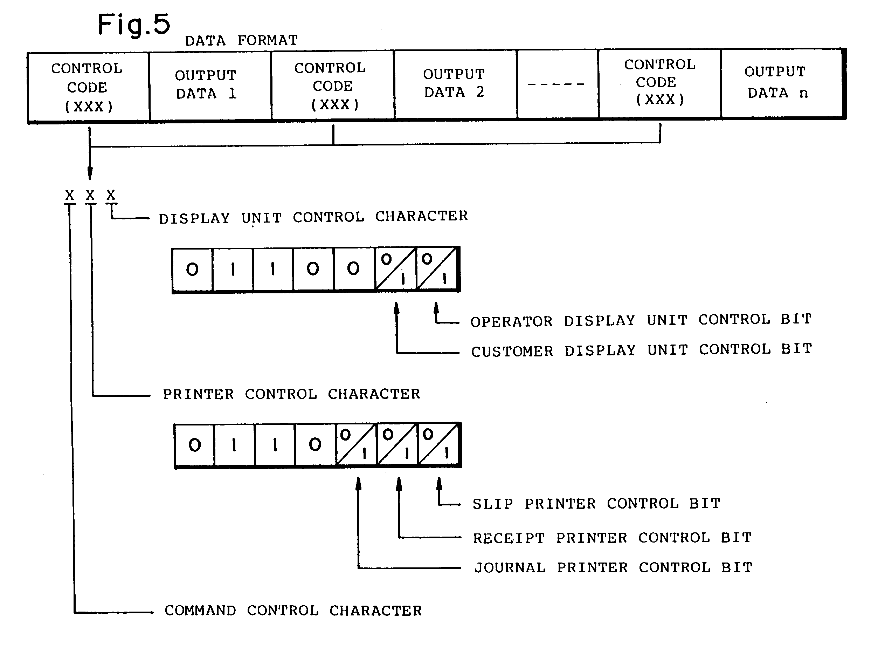

Figs. 4a, 4b and 5 are views for describing messages exchanged by the ECR 30 and CAT 1 of Fig. 1, in which Fig. 4a depicts a card transaction designating message, Fig. 4b a response message and Fig. 5 the data format of output data shown in Fig. 4b. The composition of the messages will now be described with reference to Figs. 4a, 4b and 5.

The card transaction designating message is transmitted from the ECR 30 to the CAT 1 in order to request the host computer 20 to perform authorization processing and comprises a service code, article code, value data and slip number data. A service code of "1", for example, indicates sales processing, "2" indicates prior approval, "3" indicates cancellation and "4" indicates return of an article. The article code is the code of an article purchased by a customer. The value data represents the monetary value of a purchase. The slip number has meaning only when the service code is "3" or "4" and is 0 when the service code is "1" or "2".

The response message is transmitted from the CAT 1 to the ECR 30 as a response to the card transaction designating message and comprises a service code, article code, value data, slip number data, data indicative of the results of processing and output data. Examples of data indicating the results of processing are "00", which is used when a transaction has been concluded, and an error code used when a transaction is aborted. The output data is data outputted to the display units and printers of the ECR.

As illustrated in Fig. 5, the output data contained in the response message comprises items of output data 1, 2 ... n, and control codes corresponding to the items of output data. The control codes designate destinations (display units 301, 302 and printers 303 to 305) for the output data arranged to follow the control code. Each control code includes a display unit control character, a printer control character and a command control character.

The display unit control character is for performing control of each of the display units and the printer control character is for controlling each of the printers. Both of these characters comprises eight bits, inclusive of a parity bit. The display unit control character includes an operator display unit control bit and a customer display unit control bit. When the operator display unit control bit is "1", this indicates that the output data is to be displayed on the display unit 301; when the customer display unit control bit is "1", this indicates that the output data is to be displayed on the display unit 302. If the control bit is "0", this indicates that a display is not to be presented on the corresponding display unit. The printer control character includes a slip printer control bit, a receipt printer control bit and a journal printer control bit. When one of these control bits is "1", this indicates that the output data is to be printed out by the corresponding printer 305, 304 or 303; when one of the control bits is "0", this indicates that nothing is printed out by the corresponding printer. In this embodiment, the command control character is fixed at a specific code. This code indicates that the output data is to be outputted to printers and display units specified by the two characters which follow the command control character, namely the display unit control character and the printer control character.

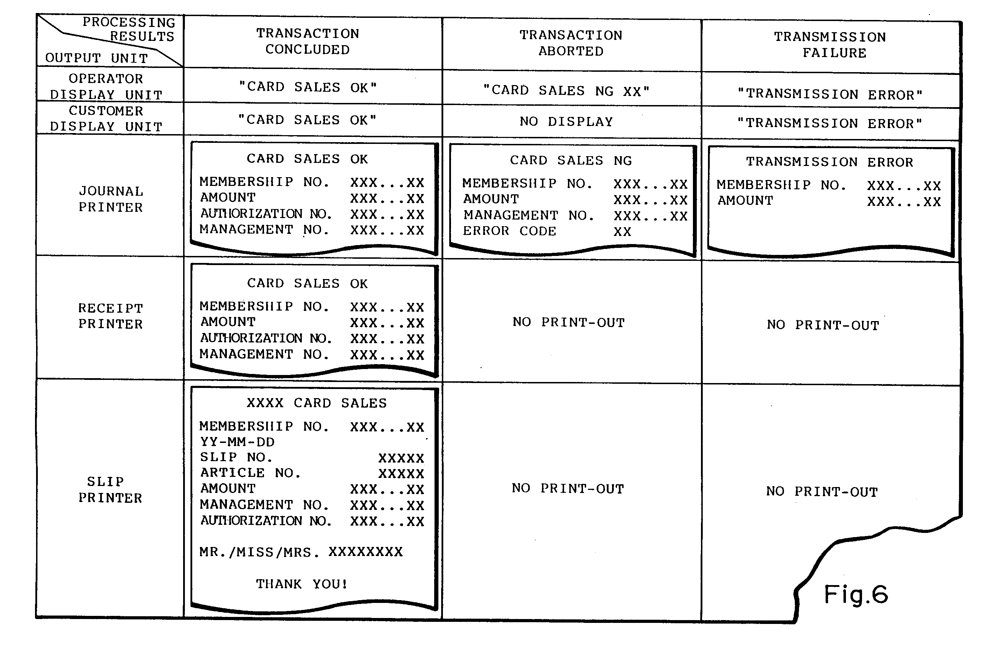

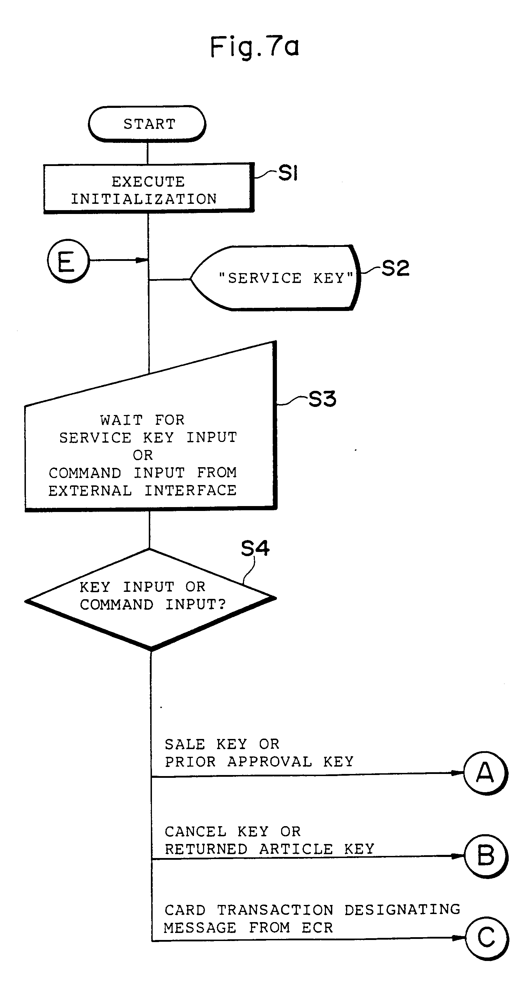

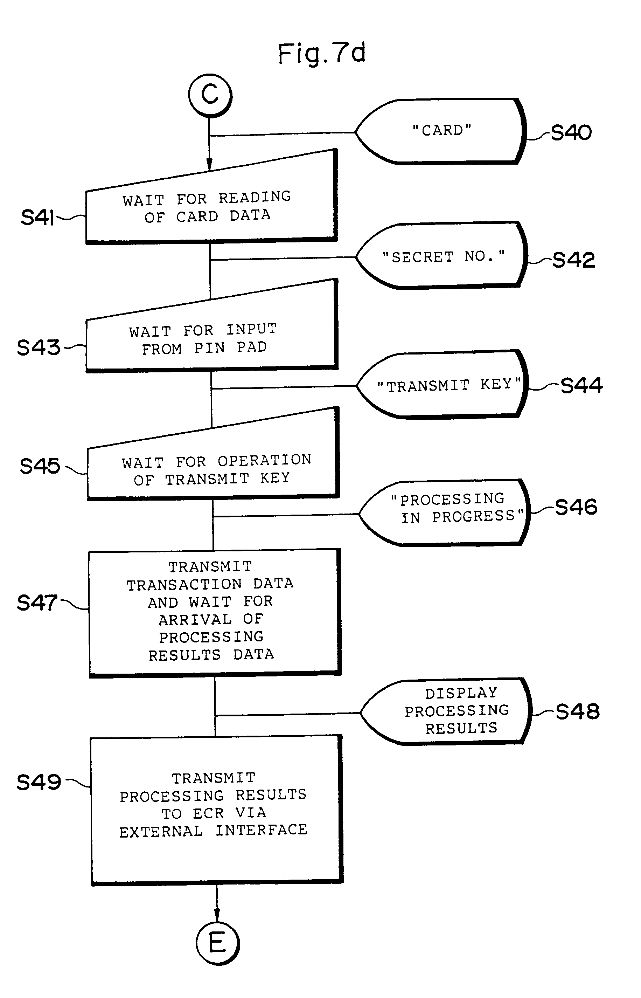

Fig. 6 is a view for describing data outputted to each of the output units of the ECR 30. Figs. 7a through 7d are flowcharts for describing the operation of the present embodiment of the invention. Operation of this embodiment will now be described with reference to Figs. 1 through 7d.

When power is introduced to the system, the CPU 2 of CAT 1 makes initial settings, such as initializing memories, at step S1. This is followed by step S2, at which the CPU 2 causes the display unit 5 to display which of the service keys 31 is to be operated. Next, at step S3, the CPU 2 waits until there is an input from one of the service keys 31 or until a command is received from the ECR 30 via the external interface 9. Various processing operations are performed depending upon whether there is an input from one of the service keys 31 or arrival of a command from the ECR 30, which is judged at step S4.

In a case where a service key 31 is operated without a command containing sales data being transmitted by the ECR 30, the CAT 1 functions as an independent CAT.

A case in which the sales key 34 or prior approval key 35 is operated will be described first. In response to operation of the sales key 34 or prior approval key 35, the CPU 2 causes the display unit 5 to display a prompt calling for insertion of a credit card at step S10. The CPU 2 waits at step S11 until card data is read by the card reader 4. The card data is stored in the RAM 7 in response to provision of the card data by the card reader 4. The CPU 2 causes the display unit 5 to display a prompt calling for entry of a secret number at step S12 and then waits for entry of the secret number from PIN pad 10 at step S13. The CPU 2 stores the secret number data in the RAM 7 in response to entry thereof from the PIN pad 10. This is followed by step S14, at which the CPU 2 causes the display unit 5 to display a prompt calling for entry of an article code, and then by step S15, at which the CPU 2 waits for entry of the article code. When the article code is entered from the keyboard 3, the CPU 2 stores the entered article code in the RAM 7. The program then proceeds to step S16, at which the CPU causes the display unit 5 to display a prompt callilng for entry of purchase value, and then to step S17, at which the CPU 2 waits for entry of the purchase value. When this data is entered from the keyboard 3, the CPU 2 stores the same in the RAM 7. This is followed by step S18, at which the CPU 2 causes the display unit 5 to display a prompt calling for operation of the transmit key 39, and then by step S19, at which the CPU 2 waits until the transmit key 39 is pressed. When the transmit key 39 is pressed, the CPU 2 causes the display unit 5 to display a message indicating that processing is in progress at step S20. Next, at step S21, the CPU 2 transmits the transaction data, which comprises the card data, secret number data, article code data and purchase value data stored in the RAM 7, to the host computer 20 of the credit company via the NCU/MODEM 8, and waits until data indicative of the results of processing is received from the host computer 20.

Based on the transaction data transmitted by the CAT 1, the host computer 20 executes such processing as determining whether the card data is abnormal and whether the customer's account contains a balance in excess of the amount of the purchase. The results of this processing are transmitted to the CAT 1. The CPU 2 causes the transmitted results of processing to be displayed on the display unit 5 at step S22.

A case in which the cancel key 36 or returned article key 37 is operated at step S3 will now be described. In response to operation of the cancel key 36 or return key 37, the CPU 2 causes the display unit 5 to display a prompt calling for insertion of a credit card at step S30. The CPU 2 waits at step S31 until card data is read by the card reader 4. The card data read is stored in the RAM 7 in response to reading of the card data. The CPU 2 causes the display unit 5 to display a prompt calling for entry of a secret number at step S32 and then waits for entry of the secret number from PIN pad 10 at step S33. The CPU 2 stores the entered secret number data in the RAM 7 in response to entry thereof. This is followed by step S34, at which the CPU 2 causes the display unit 5 to display a prompt calling for entry of an article code of an article to be cancelled or returned, and then by step S35, at which the CPU 2 waits for entry of the article code. When the article code is entered, the CPU 2 stores the article code in the RAM 7. The program then proceeds to step S36, at which the CPU 2 causes the display unit 5 to display a prompt calling for entry of the purchase value of the article returned or cancelled, and then to step S37, at which the CPU 2 waits for entry of the purchase value. In response to entry of the purchase value data, the entered amount of the purchase is stored in the RAM 7. This is followed by step S38, at which the CPU 2 causes the display unit 5 to display a prompt calling for entry of the slip number of the slip that was issued at the time the article to be returned or cancelled was purchased. This is followed by step S39, at which the CPU 2 waits for entry of the slip number. In response to entry thereof, the entered slip number is stored in the RAM 7. Next, at step S18, the CPU 2 causes the display unit 5 to display a prompt calling for operation of the transmit key 39, followed by step S19, at which the CPU 2 waits until the transmit key 39 is pressed. When the transmit key 39 is pressed, the CPU 2 causes the display unit 5 to display a message indicating that processing is in progress at step S20. Next, at step S21, the CPU 2 transmits the transaction data stored in the RAM 7 to the host computer 20 and waits until data indicative of the results of processing is received from the host computer 20. Based on the transaction data transmitted by the CAT 1, processing such as cancellation of the data registered at the time of the purchase is executed by the host computer 20, and data indicative of the results of processing are transmitted to the CAT 1. The CPU 2 causes the transmitted results of processing to be displayed on the display unit 5 at step S22.

Thus, the CAT 1 of the illustrated embodiment is capable of independently executing sales processing, prior approval processing, cancellation and returned-article processing just as the conventional CAT.

A case in which the card transaction designating message is transmitted by the ECR 30 at step S3 will now be described. Here the message is transmitted when registration processing ends in the ECR 30. When the card transaction designating message shown in Fig. 4a is transmitted by the ECR 30 via the external interface 9, the CPU 2 causes the display unit 5 to display a prompt calling for insertion of a credit card at step S40. The CPU 2 waits at step S41 until card data is read. The card data read is stored in the RAM 7 in response to reading of the card data. The CPU 2 causes the display unit 5 to display a prompt calling for entry of a secret number at step S42 and then waits for entry of the secret number from PIN pad 10 at step S43. The CPU 2 stores the secret number data in the RAM 7 in response to entry thereof. Here it is arranged to read the card data and enter the secret number data because these items of data are not contained in the card transaction designating message from the ECR 30. This is followed by step S44, at which the CPU 2 causes the display unit 5 to display a prompt calling for operation of the transmit key 39, and then by step S45, at which the CPU 2 waits until the transmit key 39 is pressed. In response to operation of the transmit key 39, the CPU 2 causes the display unit 5 to display a message indicating that processing is in progress at step S46. Next, at step S47, the service code, article code, data indicative of the amount of money and slip number data, which is contained in the card transaction designating message transmitted by the ECR 30, as well as the card data and secret number data entered from the card reader 4 and PIN pad 10, are transmitted to the host computer 20 via the NCU/MODEM 8. The CPU 2 waits until data indicative of the results of processing is received. When the data indicative of the results of processing is transmitted by the host computer 20, the CPU 2 displays the results of processing on the display unit 5 at step S48. Next, at step S49, the CPU 2 decides a control code shown in Fig. 5 in conformity with the results of processing, performs data editing to form the response message shown in Fig. 4b and transmits the message to the ECR 30 via the external interface 9. At this time the control code is determined in accordance with the classification of the results of processing, as shown in Fig. 6. Specifically, if a transaction has been concluded, an instruction is given to display a "CARD SALES OK" message on the operator display unit 301 and customer display unit 302 and to print out the particulars of the sale by the journal printer 303, receipt printer 304 and slip printer 305. If a transaction is aborted, an instruction is given to display the message "CARD SALES NG XX" solely on the operator display unit 301 and to print out the particulars of the transaction solely on the journal printer 303. The "XX" in the message is an error code. Accordingly, data of kind that might impair the reputation of the customer is not outputted on the side of the customer (i.e., on the customer display unit 302, etc.), thereby preventing an invasion of the customer's privacy. If the foregoing message were to be displayed on the customer display unit, a customer using an illegal card might flee upon seeing the display. With the CAT of the present embodiment, however, there is no danger of this and it is possible to cooperate in the capture of a culprit by immediately issuing an alarm. In case of failure of a transmission, an instruction is issued to display a message "TRANSMISSION ERROR" on the operator display unit 301 and customer display unit 302 and to print out the particulars of the transaction solely on the journal printer 303.

The procedure for deciding the output unit and the particulars of the output according to the results of processing is stored in the ROM 6.

Thus, in accordance with the embodiment as described above, the results of processing performed by the host computer 20 can be outputted solely to the necessary output units depending upon these results. In addition, the destination of an output is designated by the CAT, and the ECR merely changes over the destination in accordance with the designation. This means that no burden is placed upon the ECR program.

### Second Embodiment

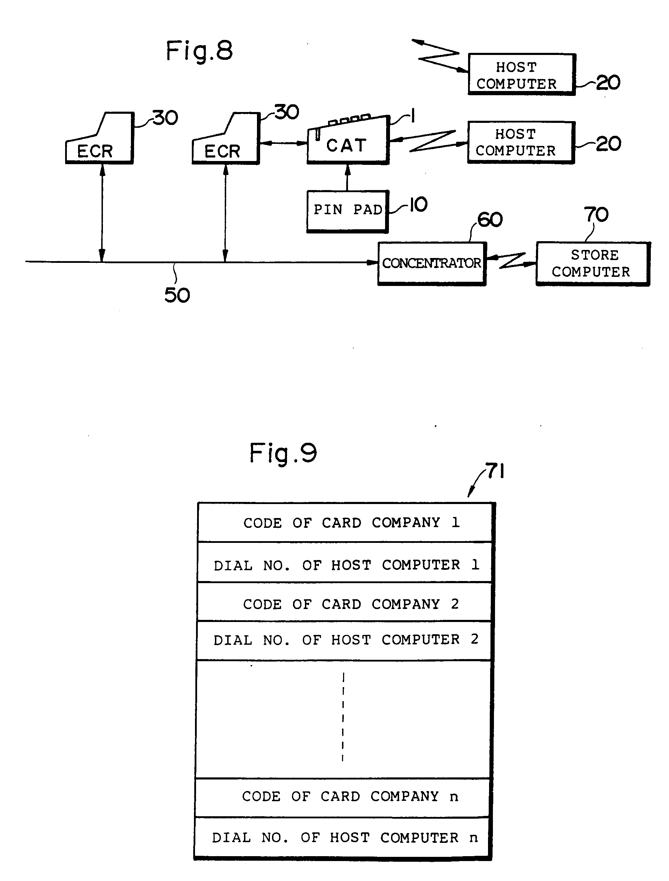

Fig. 8 is a view showing the construction of another embodiment of a card transaction processing system. The card transaction processing system shown in Fig. 8 differs from that of Fig. 1 in that the ECR 30 is further connected to a concentrator 60 via a transmission line 50, and the concentrator 60 is connected to a store computer 70, which is for totaling the sales data subjected to registration processing by each ECR 30. When sales data is transmitted by the ECR 30 in this embodiment, the CAT 1, in a case where a card issued by the store itself is used, transmits the data read from the store card and secret number, along with the sales data, to the store computer 70 via the ECR 30 and concentrator 60. This is so that payment processing may be performed using the store card. Since the key arrangement of the CAT 1 is the same as shown in Fig. 2 and the electrical construction the same as depicted in Fig. 3, a description thereof is deleted.

Fig. 9 is a view showing a company code table 71 stored in the RAM 7 of the CAT 1. The company code table 71 in Fig. 9 stores the codes of respective card companies and the host computer dial numbers of these card companies.

The messages exchanged by the CAT 1 and ECR's 30 are substantially the same as those shown in Figs. 4a, 4b and 5 and need not be illustrated here. However, there are slight differences in content. Specifically, if authorization processing by the store computer 70 is required, "01" is used as the data indicative of the results of processing. In a case where this data is "01", the output data is data transmitted to the store computer 70. Furthermore, if this data is "01", the command control character will differ from that described in connection with Fig. 5. That is, the character used will instruct that the output data is to be transmitted to the store computer 70 and that the display unit control character and printer control character are to be neglected.

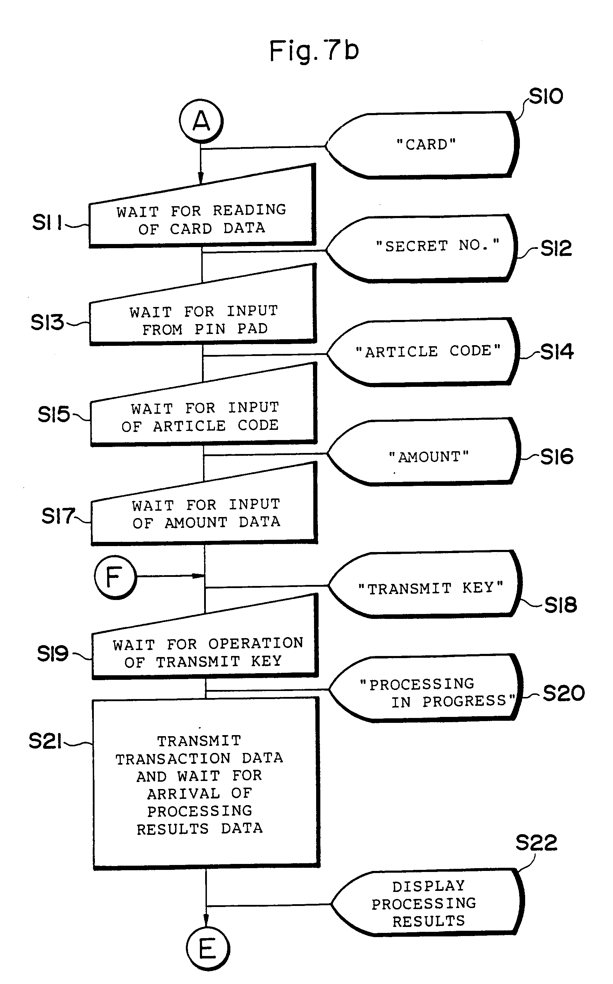

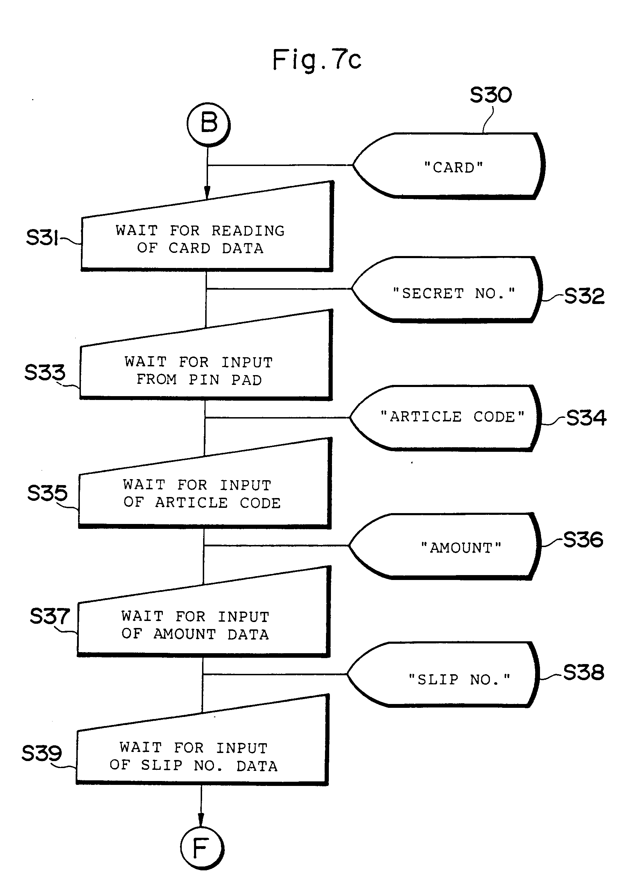

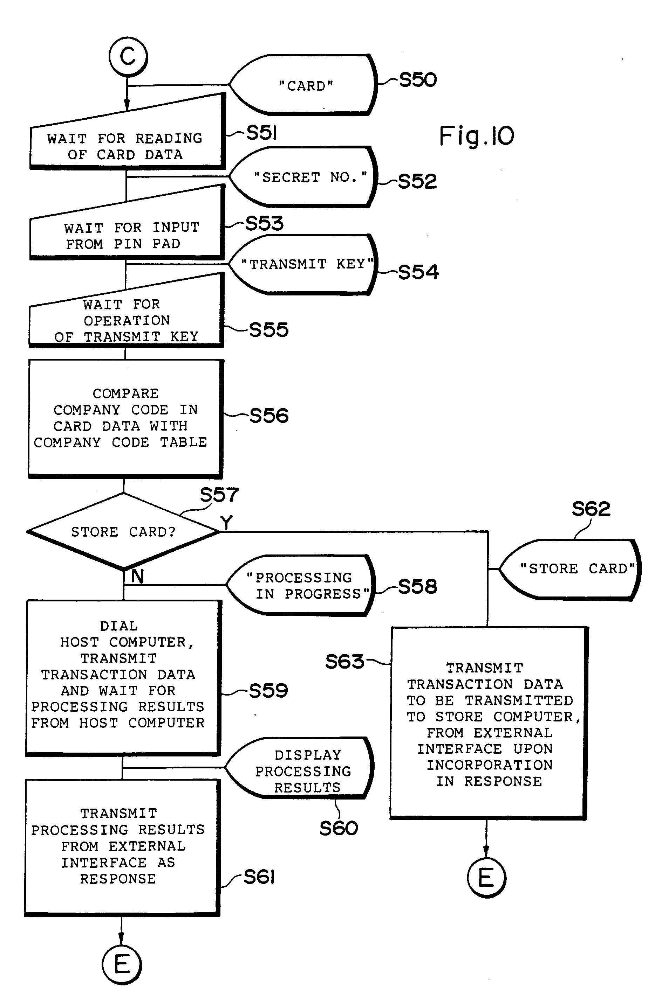

Fig. 10 is a flowchart for describing the operation of the CAT 1 in a case where a card transaction designating message is received from the ECR 30. It should be noted that initialization processing and operation in a case where a service key is pressed are the same as shown in Figs. 7a, 7b and 7c and need not be described again.

In a case where a card transaction designating message is delivered by the ECR 30, the CPU 2 causes the display unit 5 to display a prompt calling for insertion of a card at step S50. The CPU 2 waits at step S51 until card data is read. The card data is stored in the RAM 7 in response to reading thereof. The CPU 2 causes the display unit 5 to display a prompt calling for entry of a secret number at step S52 and then waits for entry of the secret number from PIN pad 10 at step S53. The secret number data is stored in the RAM 7 in response to entry thereof. This is followed by step S54, the CPU 2 causes the display unit 5 to display a prompt calling for operation of the transmit key 39, and then by step S55, at which the CPU 2 waits until the transmit key 39 is operated. The program proceeds to step S56 in response to operation of the transmit key 39.

At step S56, the CPU 2 compares the company code in the card data with the company code table 71 shown in Fig. 9 and determines whether there is a coinciding company code in the table. If there is no coinciding company code, the CPU 2 decides at step S57 that the store card has been used. It also permissible to adopt an arrangement in which the CPU 2 decides that the store card has been used when 0 has been entered as the host computer dial number. If the store card has been used, the CPU 2 causes the display unit 5 to display at step 62 a message to the effect that the store card has been used. This is followed by step S63, at which the transaction data to be transmitted to the store computer 70 is transmitted by the external interface 9 upon being incorporated in the response message.

If a credit card is found to have been used at step S57, the program proceeds to step S58, at which the CPU 2 causes the display unit 5 to display a message indicating that processing is being executed, and then to step S59, at which the host computer 20 is dialed and sent the transaction data, whereupon the CPU 2 waits for the results of processing to be delivered by the host computer 20. In response to arrival of the results of processing from the host computer 20, the CPU 2 causes the display unit 5 to display the results of processing at step S60 and then sends these results from the external interface 9 to the ECR 30 as a response at step S61.

With the second embodiment of the invention as set forth above, the destination of a data transmission is made the store computer and not the host computer of a credit card company when the store card is used. The store computer then proceeds to execute authorization processing.

## Claims

1. A card transaction processing apparatus (1) connected to a registration processing unit (30), which performs sales data registration processing, for executing transaction processing utilizing a card, comprising:
input means (3, 4, 10) capable of inputting data necessary for a card transaction when sales data is transmitted from said registration processing unit;
card transaction processing means (2, 6, 7) for executing card transaction processing based on the sales data transmitted by said registration processing unit and the data necessary for the card transaction inputted from said input means; and
selecting means (2, 6, 7) which, in dependence upon results of processing executed by said card transaction processing means, is for selecting destinations (301, 302, 303, 304, 305) for output of said results of processing.

2. The apparatus according to claim 1, wherein said destinations are a plurality of output units (301, 302, 303, 304, 305) provided on said registration processing unit (30), and said apparatus (1) further comprises transmitting means (9) for transmitting a code, which is for designating a selected output unit, to said registration processing unit together with output data.

3. The apparatus according to claim 1, wherein said card transaction processing means (2, 6, 7) executes card transaction processing by communicating with a host computer (20).

4. The apparatus according to claim 1, wherein said registration processing unit (30) is connected to a sales processing unit (70) which executes store sales processing, and said apparatus (1) further comprises:
decision means (2) for deciding, based on the data necessary for the card transaction inputted from said input means (3, 4, 10), whether a store card issued by a shop itself is being used; and
control means (2, 9) for transmitting the sales data transmitted by said registration processing unit and the data necessary for the card transaction inputted from said input means to said sales processing unit, rather than performing card transaction processing based on said card transaction processing means (2, 6, 7), in response to a decision by said decision means that the store card is being used.

## Patentansprüche

1. Kartentransaktionsverarbeitungsvorrichtung (1), die mit einer Registrierverarbeitungseinheit (30) verbunden ist, welche eine Verkaufsdatenregistrierverarbeitung durchführt, zur Ausführung einer eine Karte verwendenden Transaktionsverarbeitung, mit
Eingabemitteln (3, 4, 10), die für eine Kartentransaktion erforderliche Daten eingeben können, wenn Verkaufsdaten von der Registrierverarbeitungseinheit übertragen werden,
Kartentransaktionsverarbeitungsmitteln (2, 6, 7) zur Durchführung einer Kartentransaktionsverarbeitung auf der Grundlage der von der Registrierverarbeitungseinheit übertragenen Verkaufsdaten und der aus den Eingabemitteln eingegebenen für die Kartentransaktion erforderlichen Daten, und
Auswahlmitteln (2, 6, 7), welche abhängig von Ergebnissen einer mit den Kartentransaktionsverarbeitungsmitteln ausgeführten Verarbeitung, der Auswahl von Zielen (301, 302, 303, 304, 305) für die Ausgabe der Verarbeitungsergebnisse dienen.

2. Vorrichtung nach Anspruch 1, bei welcher die Ziele eine Anzahl von auf der Registrierverarbeitungseinheit (30) vorgesehenen Ausgabeeinheiten (301, 302, 303, 304, 305) sind, und die Vorrichtung ferner Übertragungsmittel (9) zur Übertragung eines Codes, der der Bezeichnung einer ausgewählten Ausgabeeinheit dient, auf die Registrierverarbeitungseinheit zusammen mit den Ausgabedaten aufweist.

3. Vorrichtung nach Anspruch 1, bei welcher die Kartentransaktionsverarbeitungsmittel (2, 6, 7) eine Kartentransaktionsverarbeitung durch Kommunikation mit einem Host-Rechner (20) ausführen.

4. Vorrichtung nach Anspruch 1, bei welcher die Registrierverarbeitungseinheit (30) mit einer Verkaufsverarbeitungseinheit (70) verbunden ist, welche eine Ladenverkäufeverarbeitung durchführt, und die Vorrichtung (1) ferner
Entscheidungsmittel (2) zum Entscheiden, beruhend auf den von den Eingabemitteln (3, 4, 10) eingegebenen für die Kartentransaktion erforderlichen Daten, ob eine vom eigenen Laden ausgegebene Ladenkarte gerade verwendet wird, und
Steuermittel (2, 9) zum Übertragen der durch die Registrierverarbeitungseinheit übertragenen Verkaufsdaten und der von den Eingabemitteln eingegebenen für die Kartentransaktion erforderlichen Daten auf die Verkäufeverarbeitungseinheit, statt eine Kartentransaktionsverarbeitung beruhend auf den Kartentransaktionsverarbeitungsmitteln (2, 6, 7) durchzuführen, ansprechend auf eine Entscheidung der Entscheidungsmittel, das die Ladenkarte verwendet wird, aufweist.

## Revendications

1. Dispositif de traitement de transactions par carte (1) relié à une unité de traitement d'enregistrement (30) qui exécute le traitement de l'enregistrement de données de vente, destiné à exécuter le traitement d'une transaction utilisant une carte, comportant:
un moyen d'entrée (3, 4, 10) capable d'entrer les données nécessaires à une transaction par carte lorsque les données de vente sont transmises depuis ladite unité de traitement d'enregistrement;
un moyen de traitement de transaction par carte (2, 6, 7) destiné à exécuter le traitement de la transaction par carte selon les données de vente transmises par l'unité de traitement d'enregistrement et les données nécessaires à la transaction par carte entrées depuis le moyen d'entrée; et
un moyen de sélection (2, 6, 7) qui, selon les résultats du traitement exécuté par ledit moyen de traitement de transaction par carte, est destiné à sélectionner les destinations (301, 302, 303, 304, 305) pour la sortie desdits résultats de traitement.

2. Dispositif selon la revendication 1, dans lequel lesdites destinations sont plusieurs unités de sortie (301, 302, 303, 304, 305) prévues sur ladite unité de traitement d'enregistrement (30), et ledit dispositif (1) comporte en outre un moyen de transmission (9) destiné à transmettre un code, qui sert à désigner l'unité de sortie sélectionnée, à ladite unité de traitement d'enregistrement ainsi que les données de sortie.

3. Dispositif selon la revendication 1, dans lequel ledit moyen de traitement de transactions par carte (2, 6, 7) exécute le traitement de la transaction par carte en communiquant avec un ordinateur serveur (20).

4. Dispositif selon la revendication 1, dans lequel ladite unité de traitement d'enregistrement (30) est reliée à une unité de traitement de ventes (70) qui exécute le traitement des ventes du magasin, et ledit dispositif (1) comporte en outre:
un moyen de décision (2) destiné à décider, selon les données nécessaires à la transaction par carte entrées depuis ledit moyen d'entrée (3, 4, 10), si une carte de magasin émise par le magasin lui-même est utilisée; et
un moyen de contrôle (2, 9) destiné à transmettre les donnés de vente transmises par ladite unité de traitement d'enregistrement et les données nécessaires à la transaction par carte entrées depuis ledit moyen d'entrée vers ladite unité de traitement de ventes, plutôt que d'exécuter un traitement de la transaction par carte basé sur ledit moyen de traitement de transaction par carte (2, 6, 7), en réponse à la décision du moyen de décision selon laquelle la carte de magasin est utilisée.
